Europäisches Patentamt

European Patent Office

Office européen des brevets

(11) Veröffentlichungsnummer: **0 286 967**
**A2**

## EUROPÄISCHE PATENTANMELDUNG

(21) Anmeldenummer: 88105499.3

(22) Anmeldetag: 07.04.88

(51) Int. Cl.⁴ **B01D 53/34**

(30) Priorität: 17.04.87 DE 3713169

(43) Veröffentlichungstag der Anmeldung:
**19.10.88 Patentblatt 88/42**

(84) Benannte Vertragsstaaten:
**AT BE CH DE ES FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Held, Wolfgang, Dr.**
**Wilhelmstrasse 1**
**D-3180 Wolfsburg(DE)**
Erfinder: **König, Axel, Dr.**
**Galgenkamp 13**
**D-3180 Wolfsburg(DE)**
Erfinder: **Puppe, Lothar, Dr.**
**Am Weiher 10a**
**D-5093 Burscheid(DE)**

(54) **Verfahren und Vorrichtung zur Reduktion von Stickoxiden.**

(57) Es wird ein Verfahren zur Reduktion von in sauerstoffhaltigen Abgasen, vorzugsweise in Verbrennungsabgasen von Brennkraftmaschinen, enthaltenen Stickoxiden sowie eine Vorrichtung zur Durchführung dieses Verfahrens beschrieben, wobei die Stickoxide in Anwesenheit von Kohlenwasserstoffen an Zeolithen, in die Elemente der 4. Periode eingetauscht sind, umgesetzt werden. Um eine Beeinträchtigung der Stickoxid-Reduktion durch in den Verbrennungsabgasen enthaltenes Wasser weitgehend zu vermeiden, sollen als Zeolithe solche mit hydrophoben Eigenschaften verwendet werden. Zweckmäßigerweise sollen diese Zeolithe ein relativ großes Verhältnis der Siliziumanteile zu den Aluminiumanteilen aufweisen und vorzugsweise aus Zeolithen des ZSM-Typs bestehen.

EP 0 286 967 A2

Xerox Copy Centre

## Verfahren und Vorrichtung zur Reduktion von Stickoxiden

Die Erfindung bezieht sich auf ein Verfahren zur Reduktion von in Abgasen, vorzugsweise in Verbrennungsabgasen von Brennkraftmaschinen, enthaltenen Stickoxiden unter netto-oxidierenden Bedingungen sowie auf eine Einrichtung zur Durchführung dieses Verfahrens. Der Begriff "netto-oxidierend" soll bedeuten, daß die Summe der oxidierenden Komponenten im Abgas größer ist als die der reduzierenden.

Aus einer prioritätsälteren Anmeldung ist ein Verfahren und eine Vorrichtung zur Reduktion von Stickoxiden in Abgasen unter netto-oxidierenden Bedingungen bekannt, bei der die Stickoxide in Anwesenheit von Kohlenwasserstoffen an einem Zeolithe enthaltenden Katalysator umgesetzt werden. Dabei sollen als Zeolithe solche eingesetzt werden, in die Elemente der 4. Periode eingetauscht sind. Als bevorzugte Zeolithe wurden dabei solche vom Faujasit-(Zeolith X und Zeolith Y) oder vom Mordenit-Typ angegeben.

Nun hat sich jedoch gezeigt, daß der Stickoxid-Umsetzungsgrad an den besonders erwähnten Zeolith-Typen aufgrund ihrer hohen Polarität sehr stark von dem im Abgas enthaltenen Wasser abhängig ist.

Die der Erfindung zugrundeliegende Aufgabe besteht daher darin, ein insbesondere für die Abgasreinigung von Kraftfahrzeugen geeignetes Verfahren zur Reduktion von Stickoxiden in netto-oxidierender Atmosphäre und in Anwesenheit von Wasser sowie eine Einrichtung zur Durchführung des Verfahrens vorzuschlagen, bei der ausreichend gute Umsetzungsgrade für das schädliche Stickoxid erzielt werden.

Dreiwegekatalysatoren nach dem Stand der Technik sind für den Einsatz zur Reduktion von Stickoxiden in netto-oxidierender Atmosphäre nicht geeignet.

Die Lösung dieser Aufgabe ergibt sich dadurch, daß die Stickoxide in Anwesenheit von Kohlenwasserstoffen an einem einen hydrophoben Zeolith enthaltenden Katalysator umgesetzt werden können.

Zeolithe sind kristalline Alumosilikate, die aus einem Netzwerk von $SiO_4$- bzw. $AlO_4$-Tetraedern aufgebaut sind. Die einzelnen Tetraeder sind mit Sauerstoffbrücken über die Ecken untereinander verknüpft und bilden ein räumliches Netzwerk, das von Kanälen und Hohlräumen durch zogen ist. Als Ausgleich für die negative Ladung des Gitters sind austauschbare Kationen eingelagert. Einige Zeolithe können nun bei gleicher Struktur unterschiedliche $SiO_2/Al_2O_3$-Verhältnisse aufweisen.

Durch das $SiO_2/Al_2O_3$-Verhältnis wird die Polarität und damit unter anderem die Adsorptionseigenschaft und die katalytische Eignung des Zeoliths bestimmt. $Al_2O_3$-reiche Zeolithe bevorzugen bei der Adsorption polare bzw. polarisierbare Moleküle.

Durch Erhöhen der $SiO_2/Al_2O_3$-Verhältnisse im Zeolith nimmt nun die polare Eigenschaft ab und der Zeolith zeigt zunehmende hydrophobe Eigenschaften. Allgemein kann man sagen, daß bei einem $SiO_2/Al_2O_3$-Verhältnis $\geq 15$ der Zeolith deutliche hydrophobe Eigenschaften aufweist, was sich darin äußert, daß jetzt unpolare Moleküle bevorzugt gegenüber polaren Molekülen adsorbiert werden. Das hohe $SiO_2/Al_2O_3$-Verhältnis in einem Zeolith kann man grundsätzlich auf zwei Wegen erreichen. Entweder wählt man die Synthesebedingungen so, daß ein zeolithisches Material mit einem hohen $SiO_2/Al_2O_3$-Verhältnis entsteht, oder man geht von einem (natürlichen oder synthetischen) Zeolith mit niedrigem $SiO_2/Al_2O_3$-Verhältnis aus und entfernt durch geeignete thermische bzw. chemische Behandlung einen Teil des Aluminiums aus dem Gitter.

Die Erfindung geht von der Erkenntnis aus, daß Stickoxide in Gegenwart von Sauerstoff und Kohlenmonoxiden sowie Kohlenwasserstoffen, die bevorzugt als kurzkettige Kohlenwasserstoffe vorliegen sollten, an katalytisch aktiven Zeolithen, die von der Zusammensetzung des Gitters her hydrophobe Eigenschaften aufweisen sollten, reduziert werden. Dabei hat sich überraschenderweise gezeigt, daß bei Einsatz der hydrophoben Si-reichen Zeolithe die in den Verbrennungsabgasen von Brennkraftmaschinen enthaltenen Wasseranteile eine wesentlich geringere negative Beeinflussung des Umsetzungsgrades für Stickoxide bewirken als bei Si-armen polaren Zeolithen.

Eine deutliche Verbesserung der $NO_x$-Konvertierung an den zeolithischen Katalysatoren erhält man dadurch, daß Übergangsmetalle der 4. Periode in den Zeolith mit den üblichen Ionenaustauschmethoden eingebracht werden.

Besonders geeignet für das erfindungsgemäße Verfahren sind Zeolithe vom Pentasil-Typ, wie sie beispielsweise in den US-PS 3 702 886, US-PS 3 709 979 beschrieben werden. Bei diesen Zeolithen kann bereits bei der Synthese das $SiO_2/Al_2O_3$-Verhältnis gezielt eingestellt werden. Bevorzugt soll das Verhältnis zwischen 15 und 500, besonders bevorzugt 30 - 150 sein.

Besonders gute Ergebnisse wurden vor allem an solchen Zeolithen mit Pentasilstruktur erhalten, bei denen Elemente der 4. Periode, wie vorzugsweise Kupfer, Vanadin, Chrom, Mangan, Eisen, Kobalt und Nickel einzeln als auch in beliebigen Mengenverhältnissen untereinander eingetauscht sind.

Durch Einsatz eines solchen hydrophoben Zeolithen, insbesondere vom Pentasiltyp, läßt sich das Verfahren mit Vorteil auch bei der Reinigung der aus Verbrennungsabgasen von Brennkraftmaschinen

2

bestehenden Abgase von Kraftfahrzeugen heranziehen, die mit einem einen Sauerstoffüberschuß aufweisenden Kraftstoff-Luft-Gemisch betrieben werden. Da die Abgase solcher im überstöchiometrischen Gebiet des Kraftstoff-Luft-Verhältnisses betriebenen Brennkraftmaschinen neben dem aus dem Luftüberschuß herrührenden Restsauerstoff noch einen erhöhten Anteil von Stickoxiden, zusätzlich aber auch noch einen gewissen Anteil von unvollständig verbrannten Kohlenmonoxiden und Kohlenwasserstoff enthalten, kann bei Verwendung eines Zeolith-Katalysators eine spürbare Reduzierung der Stickoxide erreicht werden.

Die Abgaszusammensetzung ist von vielen Parametern abhängig. Für einen mager abgestimmten Motor ergeben sich in Abhängigkeit vom Betriebspunkt (hier: 1900 $min^{-1}$, 40 Nm) des Motors und dem Kraftstoff-Luftverhältnis $\lambda$ beispielhaft folgende Abgaszusammensetzungen:

| $\lambda$ | 1,0 | 1,15 | 1,30 |
|---|---|---|---|
| CO % | 0,8 | 0,15 | 0,16 |
| $CO_2$ % | 13,7 | 12,6 | 10,8 |
| $O_2$ % | 0,7 | 3,0 | 5,5 |
| HC ppm | 600 | 300 | 350 |
| $NO_x$ ppm | 1650 | 1240 | 250 |

Der Wassergehalt im Abgas beträgt ca. 10 bis 13 Vol % in Abhängigkeit von Motorabstimmung und Kraftstoff. Vorzugsweise wird der Motor mit einem Kraftstoff-Luft-Verhältnis betrieben, das neben gutem Fahrverhalten und optimalem Kraftstoffverbrauch deutlich verringerte $NO_x$-Emisionen ergibt.

Für den Fall, daß in den Abgasen keine genügend große Menge an kurzkettigen Kohlenwasserstoffen vorhanden ist, die bekanntlich bei der motorischen Verbrennung eines im überstöchiometrischen Bereich liegenden Kraftstoff-Luft-Verhältnisses zur Laufgrenze des Motors hin wieder ansteigen, kann auch daran gedacht werden, den Verbrennungsgasen vor der Einleitung in den Zeolith-Katalysator gasförmige Kohlenwasserstoffe zusätzlich zuzumischen, um so eine wirkungsvolle Stickoxid-Reduktion zu erreichen.

Der überraschende Vorteil des erfindungsgemäßen Verfahrens besteht aber darin, daß die in den Verbrennungsgasen der Brennkraftmaschine enthaltenen Stickoxide mit dem in den Abgasen normalerweise vorhandenen Kohlenmonoxiden und Kohlenwasserstoffen als Reduktionsmittel sowie dem aufgrund der Verbrennung eines mageren Kraftstoff-Luft-Gemisches vorhandenen Restsauerstoff auch bei Anwesenheit von Wasser weitgehend umgesetzt werden.

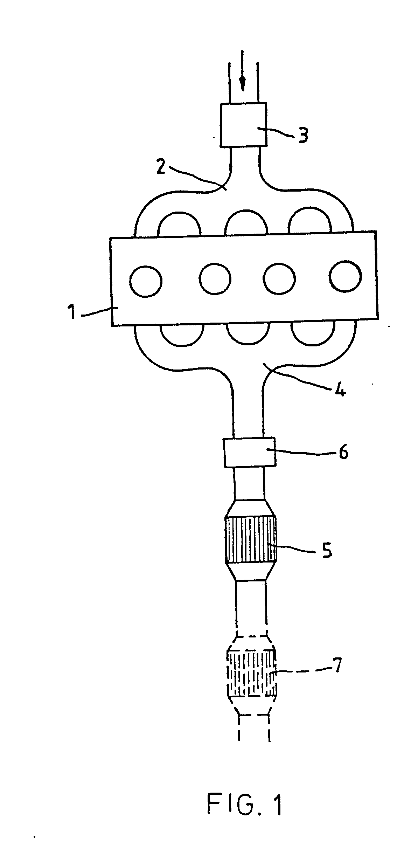

In der Zeichnung ist anhand eines schematischen Schaltbildes eine Brennkraftmaschine für ein Kraftfahrzeug angegeben, in dessen Abgasleitung ein Zeolith-Katalysator angeordnet ist. Dabei bezeichnet 1 eine herkömmliche, beispielsweise vierzylindrige Brennkraftmaschine der Diesel-oder Otto-Bauart mit einer in einer Ansaugleitung 2 angeordneten Einrichtung 3 zur Zuführung von Kraftstoff in die durch die Ansaugleitung 2 angesaugte Luft. Mit 4 ist eine der Brennkraftmaschine 1 nachgeschaltete Abgasanlage angegeben, in der ein Konverter 5 mit einem Zeolithe enthaltenden Katalysator so eingeschaltet ist, daß die von der Brennkraftmaschine abgegebenen Verbrennungsabgase vor dem Austritt in die Atmosphäre über diesen auf Schüttgut oder vorzugsweise auf einem monolithischen Körper angeordneten Katalysator geführt werden. Mit 6 ist noch eine nur gegebenenfalls vorgesehene Vorrichtung zur Zuführung von Kohlenwasserstoffen oder Alkoholen in die Abgasleitung vor dem Zeolith-Katalysator bezeichnet, während mit 7 ein ebenfalls nur gegebenenfalls vorgesehener zweiter Konverter mit einem herkömmlichen Oxidationskatalysator angegeben ist.

Durch entsprechende Einstellung der Kraftstoffzuführeinrichtung 3 wird die Brennkraftmaschine 1 mit einem mageren Kraftstoff-Luft-Gemisch betrieben, dessen Kraftstoff-Luft-Verhältnis $\lambda$ >1 ist. Während bei Diesel-Brennkraftmaschinen ein solches Kraftstoff-Luft-Verhältnis wegen des andersartigen Verbrennungsverfahrens praktisch immer vorhanden ist, bemüht man sich heute bei Otto-Motoren aus Kraftstoffverbrauchsgründen mit mageren Gemischen zu arbeiten. Die Abgase solcher mit mageren Gemischen betriebenen Brennkraftmaschinen weisen neben relativ niedrigen Gehalten an Kohlenmonoxid einen gegenüber dem Zustand bei stöchiometrischem Gemisch wieder ansteigenden Gehalt an Kohlenwasserstoffen (HC) und einen Gehalt an Stickoxiden auf, der zwar gegenüber dem Zustand bei $\lambda$ = 1 deutlich abgesunken ist, aber dennoch aus Gründen der Luftreinhaltung weiter zu reduzieren ist. Infolge der Verbrennung eines mageren Gemisches ist auch noch Restsauerstoff in dem Abgas vorhanden. Schließlich sind in den Verbrennungsabgasen auch noch gewisse Anteile von Wasser enthalten, die zum Teil während des Verbrennungsvorgangs durch Oxidation von Wasserstoffanteilen entstanden sind.

Dieses Verbrennungsabgas wird dann über den Monolith-oder Schüttgutkonverter 5 mit dem Zeolith-

3

Katalysator geleitet, wobei die in dem Abgas vorhandenen restlichen Kohlenmonoxide und Kohlenwasserstoffe zusammen mit dem freien Sauerstoff eine Umsetzung der Stickoxide bewirken. Dabei werden gleichzeitig die Stickoxide und die restlichen Kohlenmonoxide und Kohlenwasserstoffe umgewandelt.

Nur für den Fall, daß die in den Abgasen der Brennkraftmaschine enthaltenen Kohlenwasserstoffe nicht ausreichen sollten, die gewünschte Stickoxid-Reduktion in ausreichendem Maße zu bewirken, kann die in der Zeichnung mit 6 angedeutete Dosierungsvorrichtung vorgesehen sein, die dann eine etwa zusätzlich erforderliche Menge an Kohlenwasserstoffen oder Alkoholen in gasförmiger oder flüssiger Form und fein verteilt in die Abgasanlage vor den Zeolith-Katalysator einbringt.

Um das bei der Stickoxid-Umsetzung nicht verbrauchte Kohlenmonoxid oder auch den überschüssigen Kohlenwasserstoff durch Oxidation zu beseitigen, kann dem Konverter 5 mit dem Zeolith-Katalysator noch der zweite Konverter 7 nachgeschaltet werden, der einen einfachen Oxidationskatalysator, zum Beispiel unter Verwendung von Edelmetallen, aufweisen kann. Dieser zweite Konverter 7 könnte dabei mit dem ersten Konverter 5 derart zusammengefaßt sein, daß auf einem ersten Teil eines gemeinsamen monolithischen Trägerkörpers der Zeolith-Katalysator und auf einem in Strömungsrichtung nachfolgenden Teil der Oxidationskatalysator aufgebracht ist.

Die Erfindung wird anhand der folgenden Beispiele noach näher erläutert ( %-bzw. Teile-Angaben beziehen sich auf Gew.-% bzw. Gew.-Teile).

Beispiel 1

In einer Laborapparatur wurde ein Gasgemisch, das unter anderem 800 ppm Ethen, 1.6 % Sauerstoff und 1500 ppm Stickoxide enthält, bei Temperaturen von 200 bis 400°C und bei einer Raumgeschwindigkeit von ca. 11 000 h$^{-1}$ über einen Katalysator aus einem kupferausgetauschten $Al_2O_3$ gebundenen Zeolithen des Typs ZSM5 geleitet, dessen $SiO_2/Al_2O_3$ Verhältnis ca. 100 betrug. Der Stickoxidgehalt wurde bei diesem beispielhaften Versuch um 50 % verringert.

Bei Anwesenheit von 10 % Wasserdampf im Gasgemisch wurde der Stickoxidgehalt um ca. 40 % verringert, das heißt die Stickoxidumsetzung verschlechterte sich um ca. 20 %.

Wurde als Katalysator vergleichsweise ein kupferausgetauschter Zeolith vom Typ Mordenit verwendet, dann verschlechterte sich die Stickoxidumsetzung durch die Anwesenheit von 10 % Wasser bei sonst gleichen Bedingungen um 50 %.

Beispiel 2

Wurde das Gasgemisch aus Beispiel 1 über einen Vanadinausgetauschten Zeolith des Typs ZSM5 geleitet, dessen $SiO_2/Al_2O_3$ Verhältnis ca. 100 betrug, dann wurde der Stickoxidgehalt bei 590° C um ca. 5 % verringert.

Beispiel 3

Wurde das Gasgemisch aus Beispiel 1 über einen Manganausgetauschten Zeolith des Typs ZSM5 geleitet, dessen $SiO_2/Al_2O_3$-Verhältnis ca. 100 betrug, dann wurde der Stickoxidgehalt bei 570 bis 590° C um ca. 26 % verringert.

Beispiel 4

Wurde das Gasgemisch aus Beispiel 1 über einen Eisenausgetauschten Zeolith des Typs ZSM5 geleitet, dessen $SiO_2/Al_2O_3$-Verhältnis ca. 100 betrug, dann wurde der Stickoxidgehalt bei 590° C um ca. 4 % verringert.

## Beispiel 5

Wurde das Gasgemisch aus Beispiel 1 über einen Kupfer ausgetauschten Zeolith des Typs ZSM11 geleitet, dessen $SiO_2/Al_2O_3$-Verhältnis ca. 100 betrug, dann wurde der Stickoxidgehalt bei 300° C um ca. 50 % verringert. Bei Anwesenheit von 10 % Wasserdampf in dem Gasgemisch wurde der Stickoxidgehalt um ca. 40% verringert. Auch hier ergab sich also durch Anwesenheit von Wasser eine Reduzierung der Stickoxidumsetzung um ca. 20%.

## Beispiel 6

Wurde das Gemisch aus Beispiel 1 über einen Kupferausgetauschten Zeolith des Typs ZSM11 geleitet, dessen $SiO_2/Al_2O_3$-Verhältnis ca. 100 betrug, dann wurde der Stickoxidgehalt bei 300° C um ca. 50 % verringert.

## Beispiel 7

Wurde das Gasgemisch aus Beispiel 1 über einen Standard 3-Wege-Katalysator, wie er Stand der Technik ist, geleitet, dann wurde keine Stickoxidumsetzung beobachtet.

## Ansprüche

1. Verfahren zur Reduktion von in Abgasen, vorzugsweise in Verbrennungsabgasen von Brennkraftmaschinen, enthaltenen Stickoxiden bei netto-oxidierenden Bedingungen, wobei die Stickoxide in Anwesenheit von Kohlenwasserstoffen und Kohlenmonoxid an einem Katalysator umgesetzt werden, der Zeolithe, in die gegebenenfalls Elemente der 4. Periode eingetauscht sind, enthält, dadurch gekennzeichnet, daß Zeolithe mit hydrophoben Eigenschaften verwendet werden.

2. Verfahren nach Anspruch 1, dadurch gekennzeichnet, daß als Zeolithe solche mit einem Verhältnis von Silizium-zu Aluminiumanteilen ≥ 15 verwendet werden.

3. Verfahren nach Anspruch 2, dadurch gekennzeichnet, daß Zeolithe verwendet werden, deren Verhältnis von Silizium-zu Aluminiumanteilen 15 ÷ 500, vorzugsweise 30 ÷ 150, beträgt.

4. Verfahren nach einem der Ansprüche 1 bis 3, dadurch gekennzeichnet, daß als Zeolithe solche des Pentasil-Typs verwendet werden.

5. Verfahren nach einem der Ansprüche 1 bis 4, dadurch gekennzeichnet, daß als Element der 4. Periode Cu eingetauscht ist.

6. Vorrichtung zur Durchführung des Verfahrens nach einem der Ansprüche 1 bis 5 in einer Abgasanlage einer mit Sauerstoffüberschuß betriebenen Brennkraftmaschine, wobei in der Abgasanlage ein Katalysator angeordnet ist, der Zeolithe, in die Elemente der 4. Periode eingetauscht sind, aufweist, dadurch gekennzeichnet, daß die Zeolithe hydrophobe Eigenschaften aufweisen.

7. Vorrichtung nach Anspruch 6, dadurch gekennzeichnet, daß der Katalysator (5) Zeolithe mit einem Verhältnis von Silizium-zu Aluminiumanteilen ≥ 15 enthält.

8. Vorrichtung nach Anspruch 7, dadurch gekennzeichnet, daß der Katalysator (5) Zeolithe enthält, deren Verhältnis von Silizium-zu Aluminiumteilen 15 ÷ 500, vorzugsweise 30 ÷ 150, beträgt.

9. Vorrichtung nach einem der Ansprüche 6 bis 8, dadurch gekennzeichnet, daß der Katalysator (5) Zeolithe vom Pentasil-Typ enthält.

10. Verwendung eines Katalysators, der hydrophobe Zeolithe vom Pentasil-Typ mit einem Si/Al-Verhältnis ≥ 15, in die gegenbenenfalls Elemente der 4. Periode eingetauscht sind, enthält, zur Reduktion von Stickoxiden aus Sauerstoff enthaltenden Abgasen in Anwesenheit von Kohlenwasserstoffen und Kohlenmonoxid.

0 286 967

FIG. 1